# EUROPEAN PATENT SPECIFICATION

(11) **EP 2 559 336 B1**
(45) Date of publication and mention of the grant of the patent: **09.04.2014**
(21) Application number: 11006790.7
(22) Date of filing: 19.08.2011
(51) Int. Cl.: A01K 61/00

(54) **System and method for automatic classification of fish alevins by means of optical methods**
System und Verfahren zur automatischen Klassifizierung von Fischlarven mit optischen Verfahren
Système et procédé de classification automatique d'alevins de poisson au moyen de procédés optiques

(43) Date of publication of application: 20.02.2013
(73) Proprietor: Asociación Industrial de Óptica, Color e Imagen - AIDO, 46980 Paterna (ES); Tecnologia Marina Ximo, S.L., 36212 Samil Pontevedra (ES); Kronotec, S.L., 46470 Massanassa Valencia (ES)
(72) Inventor: Simon Martin, Santiago, Parque Tecnologico 46980 Paterna (Valencia) (ES); Granero Montagud, Luis, Parque Tecnologico 46980 Paterna (Valencia) (ES); Hervas Juan, Juan, Parque Tecnologico 46980 Paterna (Valencia) (ES); Dominguez Sanchez, Ruben, Parque Tecnologico 46980 Paterna (Valencia) (ES); Pastor Carbonell, Begona, Parque Tecnologico 46980 Paterna (Valencia) (ES); Ribes Gomez, Emilio, Parque Tecnologico 46980 Paterna (Valencia) (ES); Minino Arbilla, Inaki, 36212 Samil (Pontevedra) (ES); Gracia Salvador, Joaquin, 36212 Samil (Pontevedra) (ES); Dolz Garcia, Ramon, 46470 Massanassa (Valencia) (ES)
(74) Representative: Carvajal y Urquijo, Isabel

(56) References cited:
- WO-A1-2012/008843
- CH-A2- 701 341
- US-A- 4 934 537

## Description

### Field of the Invention

The present invention belongs to the automation and classification field using optical means and artificial visual means.

### Background of the Invention

The inspection of alevins in the search of defects, deformities and abnormalities is currently performed manually. The fishes are sedated, in many cases with clove dissolved in water or another suitable chemical substance to allow the workers to grab the fish with their hand, one by one, moving and positioning them for their correct classification in the fish farm inspection areas. This task is carried out on tables with background illumination where the inspection is performed entirely visually. Once the worker decides the state of the fish, he/she deposits the same in one or another selection area.

The current process presents a very significant limitation consisting of the subjectivity of the human inspection. This subjectivity would allow one and the same individual to be classified in a different manner by one worker or another. Furthermore, the worker is susceptible to suffering fatigue which leads him/her to commit additional errors in the classification.

On the other hand, the fishes must be sedated at all times since a disturbance in their environment due to a change of currents, noises or unusual movements (such as for example, the removal of the individual from the water) produces a stress in the animal directly affecting the health thereof, even resulting in death. Additionally, the sedation process usually presents losses in the fish lot since some do not recover and die.

On the other hand, the use of systems, components and equipment based on optical means for estimating morphological and physiological characteristics of fishes in aquaculture are known.

Application W09316351 describes an identification and examination method and system in which the fishes are inspected in an aqueous medium. In this application, the fishes pass through a reduced dimension funnel type area where the individual passage of the fishes is produced. At the passing point, a camera and an illumination source is attached facing the same. When the fish passes between the camera and the illumination source, the light passage is blocked and a solid silhouette of the individual is obtained, from which length, size and even weight parameters can be derived. The application only obtains solid images of the fishes and does not contemplate any classification system according to the characteristics observed in the morphology of the fishes.

Application GB2203540-A describes a method and a device for measuring, counting and classifying fishes into different tanks according to their size. The invention integrates an individualised positioning system which allows a fish to pass through a channel in which the length thereof is measured from its passing speed before one or several electromagnetic spot sensors. The application follows the same electromagnetic radiation blocking principle since the sensors are placed longitudinally along the channel track through which the fish passes. In this case the corresponding spot light sources are located facing the sensors. When the fish passes between the sensor and the light source, it blocks the beam and the sensor stops registering signal. Thus, by means of calculating the signal blocking time and estimating the passing speed, in this case performed by means of a second sensor-light source pair separated a specified distance from the first through where the fish is also made to pass, the length of the individual can be derived. The application only classifies the fishes according to sizes.

In application GB2201772-A, unlike application GB2203540-A, a linear array of spot sensors specifically photosensors illuminated with a continuous linear source are used and said photosensors are arranged longitudinally in the direction of the passage of the fishes in the corresponding channel track. In this case, the fish is made to pass between the sensors and the light source. Here, the sensors not receiving radiation from the source, due to the blocking of the same by the body mass of the fish, directly determine the length of the fish and consequently estimate the degree of growth of the fish. However, the movement and the passage of the fish between the linear array of spot sensors and the light presents a considerable error since the fish can misalign itself and produce a wrong measurement.

Application JP2009195173 separates the fishes one by one and performs a dry handling and positioning of the fish. This handling consists of securing the fish for its subsequent treatment. The estimation of the length of the fish is performed together by means of using matrix sensors in a way similar to that disclosed in the previous applications.

According to the described context, a system and method for inspection and automatic classification of alevins which will solve the limitations suffered by the sector was desirable. Document CH 701 341 A2 discloses a system and a method for automatic classification of fish according to the preamble of independent claims 1 and 9.

### Description of the Invention

This invention presents a solution which overcomes the limitations previously described eliminating the human subjectivity by means of using artificial visual means and applying processing and autonomous decision algorithms. Thus, the invention is not only limited to obtaining the length of the individual but offers a measurement of the body area of the fish for estimating the size, length and weight, and furthermore, applies image processing algorithms for detecting defects and malformations in the individual in different parts of its anatomy such as head, body and tail.

Furthermore, it allows the scalability of the production in farms and fish farms in a fast and standardised manner.

The objective of this invention is an autonomous and automatic system for the classification of alevins based on capturing images and applying algorithms detecting deformities, malformations and defects of the fish thereon, consequence of anatomical, physiological, genetic and growth problems caused by the environment conditions or by diseases, and algorithms estimating size, length and weight of said individuals. The algorithms allow a classification which complies with the pre-established quality standards.

Mainly, the system of the invention according to claim 1 integrates the following subsystems: (i) a fluid-mechanical subsystem for feeding, transporting and positioning alevins for their subsequent analysis, (ii) an artificial vision subsystem for capturing images of fishes and for making decision for classification and (iii) a subsystem for separating, handling and grouping fishes into batches according to the classification result.

The system comprises feeding means for feeding individuals removing each fish from the reception tank where they are initially deposited according to a determined rate. The feeding means transport and deposit the fish on an inspection plate made of a transparent material which allow viewing the fish from any angle. A plurality of illumination points of the same or various shapes, with the same or different spatial and spectral emission standards, arranged around the inspection plate, illuminate the fish whereas a plurality of cameras located around the plate, at either side of said plate and with the same or different field of vision, capture colour contrast images by contrast fluorescence and/or reflectance of the fish from several points. The images acquired by the cameras feed processing means which, by means of applying specific algorithms for detecting physiological and morphological characteristics of the fishes, classify the analysed fish. The algorithms allow the detection of outer body defects, malformations and deformities. There is arranged around the inspection plate where the analysed fish rests a plurality of channel openings through which the fish will be directed according to the classification result. Depending on the result, the fish will be diverted, preferably by means of blowers, towards one of the possible destination channels.

The classification will preferably comprise the following results:
a. The fish is correct, due to the analysed biometric, physiological and morphological parameters of the fish are within the accepted predefined regions.
b. The fish is incorrect, due to the analysed biometric, physiological and morphological parameters of the fish are outside the accepted predefined regions.

The accepted region determines the operation of the system since the fishes will be classified as correct or incorrect depending if the analysed biometric, physiological and morphological parameters are adapted to the quality requirements pre-established by the user.

The processing means of the system can comprise a control module allowing the individual removal of the fish from the reception tank according to a determined rate. Thus, the system can be adapted and adjusted for the purpose of allowing the duplication of the inspection cycle, i.e., the processing means can process two individuals simultaneously without any variation of the described system. This duplication allows the reduction of the cycle times by half in terms of production needs.

Additionally, the control module can allow managing the processing means, comprising, on one hand, user interfaces showing the captured images and the classification results obtained, and, on another hand, a database storing the results obtained by the system.

Likewise, the control module can control the separating means by enabling the access of the selected fish towards one of the destination channels according to the classification performed.

Therefore, the system for automatic classification of fish alevins by means of optical methods of the invention is disclosed in independent claim 1.

The feeding means comprises a conveyor belt contained in the reception tank transferring the fishes which are deposited thereon towards a positioning ramp ending at the inspection plate.

The processing means preferably comprises the detection of the malformations, deformities and operculum, spinal, mouth, nose, eye, fin, pigmentation and body silhouette defects, as well as the detection of defects caused by diseases and injuries, of the fishes inspected by means of applying models based on silhouette correlation, estimation of volumes in colour representation multi-dimensional spaces, including spatial modelling from fluorescence signals, and segmentation and filtering of contrasting colour images.

The separating means preferably comprise a channel divider directing the fish towards a destination channel by means of the movement of a hatch activated with an electrovalve enabling the access of the fish towards the selected channel from the classification result. In this case, the channel divider could comprise a third channel enabling the access of the fish to the reception tank if the classification has been erroneous.

The processing means are preferably configured for estimating the length, the size and the biomass of each fish inspected by the system.

Preferably, the processing means comprise a control module configured for:
- managing the feeding means by enabling the individual removal of fishes from the reception tank according to a determined rate;
- managing the processing means, comprising user interfaces which show the captured images and the classification results obtained and a database which stores the results obtained;
- controlling the separating means by enabling the access of the selected fish towards one of the destination channels protruding from the channel divider according to the classification performed.

The method for automatic classification of fish alevins by means of optical methods of the invention is disclosed in independent claim 9.

The feeding means comprises a conveyor belt contained in the reception tank transferring the fishes which are deposited thereon towards a positioning ramp ending at the inspection plate.

The processing means are preferably configured for detecting the malformations, deformities and operculum, spinal, mouth, nose, eye, fin, pigmentation and body silhouette defects, as well as for detecting of defects caused by diseases and injuries of the fishes inspected by means of applying models based on silhouette correlation, estimation of volumes in colour representation multi-dimensional spaces, including spatial modelling from fluorescence signals, and segmentation and filtering of images.

The separating means preferably comprises a channel divider directing the fish towards a destination channel by means of the movement of a hatch activated by an electrovalve enabling the access of the fish towards the selected channel from the classification result. In this case, the channel divider could comprise a third channel enabling the access of the fish to the reception tank if the classification has been erroneous.

The processing means are preferably configured for estimating the length, the size and the biomass of each fish inspected by the system.

Preferably, the processing means comprise a control module configured for:
- managing the feeding means by enabling the individual removal of fishes from the reception tank according to a determined rate;
- managing the processing means, comprising user interfaces which show the captured images and the classification results obtained and a database which stores the results obtained;
- controlling the separating means by enabling the access of the selected fish towards one of the destination channels protruding from the channel divider according to the classification performed.

### Brief Description of the Drawings

A set of drawings aiding to better understand the invention which is specifically related with an embodiment of said invention presented as a non-limiting example will be very briefly described below.
Figure 1 shows the subsystem for feeding, transporting and positioning fish alevins. '
Figure 2 shows the artificial vision subsystem for the inspection of the fish deposited on the inspection plate.
Figure 3 shows the inspection plate.
Figure 4 shows the system for automatic classification described.

### Detailed Description of an Embodiment

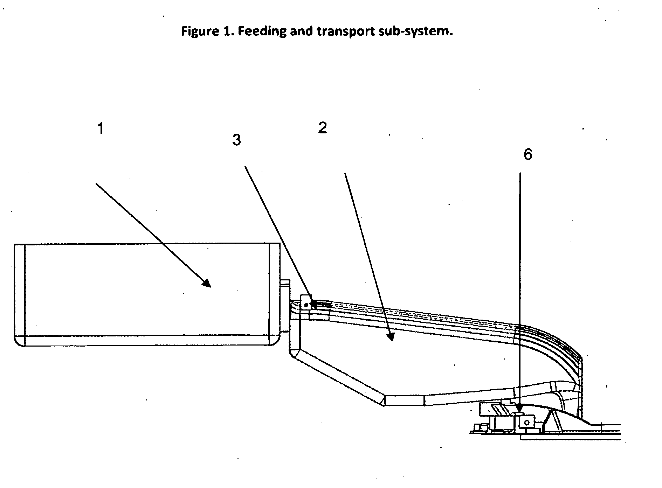

Figure 1 shows the subsystem for feeding, transporting and positioning individuals on the inspection plate 6. In a manner independent from the system, the individuals have initially been positioned inside the reception tank 1 of the system by means of transfer pumps or manually. The shown subsystem comprises the reception tank 1 where the fish to be classified are deposited, such that by means of a series of water currents induced inside the reception tank 1 and the arrangement of separation brushes, the fishes are separated and positioned on a conveyor belt functioning as feeding means of the system transporting the fishes from the tank 1 to a positioning ramp 2 ending at an inspection plate 6. There are other separating methods based on bottom-less V-shaped channels, where the body of the fish falls due to its own weight, being trapped between the walls due to the larger size of the head in comparison with the lower opening. Nevertheless, this method of separating and aligning present difficulties with alevins due to their variable size and their morphology. The ramp 2 has a V-shaped transversal section through which, due to the force of gravity and the water current generated by a tubular water flow channel track 3, enabling the flow in a longitudinal manner with respect to the movement of the fishes on the ramp 2, these run along the ramp 2 at an suitable speed such that upon reaching the end of the ramp 2, they fall on the inspection plate 6 in the area designated for the inspection. Previously and for the purpose of preventing adding unnecessary water onto the inspection plate 6, this has been cleared by means of a series of drainage holes made in the end part of the ramp 2.

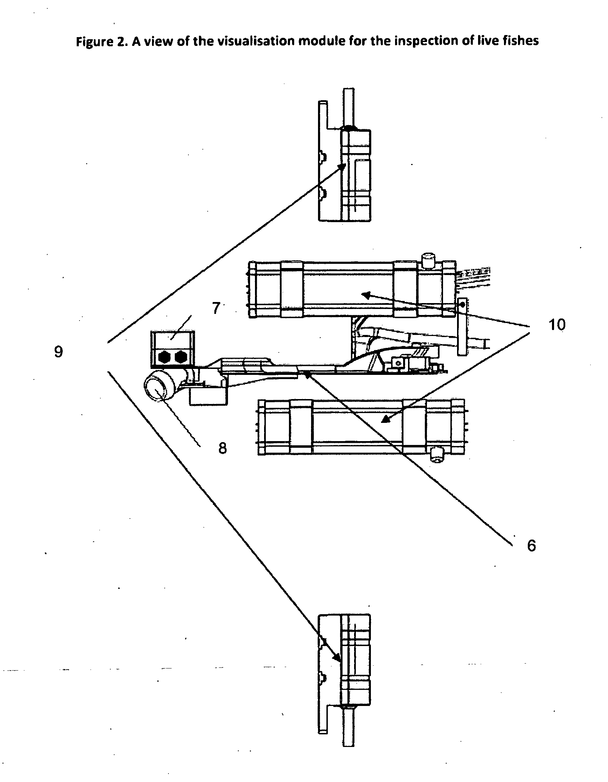

Figure 2 schematically shows an embodiment of the artificial vision subsystem. The inspection plate 6 is illuminated in this case by two matrix illumination points 10 concentrating the electromagnetic radiation in the space where the preferably transparent inspection plate 6 where the fish is deposited, is located. The arrangement of the illumination points 10 is such that it allows a homogenous illumination of the central area. In this case , respective preferably colour and high resolution matrix cameras 9 are positioned at both sides of the inspection plate 6 which allow capturing the right side and left side of the fish located on the plate 6 with different perspectives. The information acquired by the cameras 9 is diverted to processing means responsible for detecting the defects, the malformations and the deformities by means of determining the biometric, morphological and physiological characteristics of the inspected fishes, from applying models based on silhouette correlation, estimation of volumes in colour representation multi-dimensional spaces, from the colour images, being able to include fluorescence images and segmentation and filtering of images. In the detection, the algorithms process the image and extract a series of correlation parameters, pixel count and derivative values.

From said detection, the processing means classify the inspected fish based on whether the characteristics extracted therefrom belong or do not belong to the previously established accepted region. The processing means allow the configuration of the accepted region according to the predetermined quality requirements, such that, the system adapts to the quality requirements established by the user.

Preferably, the detection and the image processing are performed on the inspection plate 6 where a sedated alevin of any breed species is deposited. The animal, due to the sedation, remains sufficiently inert to allow capturing one or more colour images by means of the cameras 9. For the purpose of capturing quality images for their subsequent analysis, the artificial vision subsystem will execute a fish detection routine in the field of vision which will allow the system to detect the presence or absence thereof by means of applying two-dimensional correlation with a fish silhouette model using illumination and background removal techniques. Once the presence thereof has been detected, the system will wait for a predetermined time so that the movement of the animal ceases before capturing the images. The captured images will be segmented for the purpose of selecting the area of fish inside the image. The algorithms for detecting operculum, spinal, mouth, nose, eye, fin, pigment and body silhouette defects, as well as the algorithms for detecting defects caused by diseases and/or injuries, such as flaking, scrapes, cuts, fungus, parasites, will be applied sequentially on the images. When the images have been analysed, the information of the results from the analysis will be compiled and whether the fish is correct or not will be determined. Once the verdict has been issued, the fish is ejected by means of activating the water ejectors 4, blowers 5 and a hatch activated by means of an electrovalve 7 which will divert the fish towards a container or another according to the channel chosen by the activation of the hatch inside the channel divider 8. After the blowing and water ejection signal is activated, the system will wait for a predetermined time to start the detection of the following fish again.

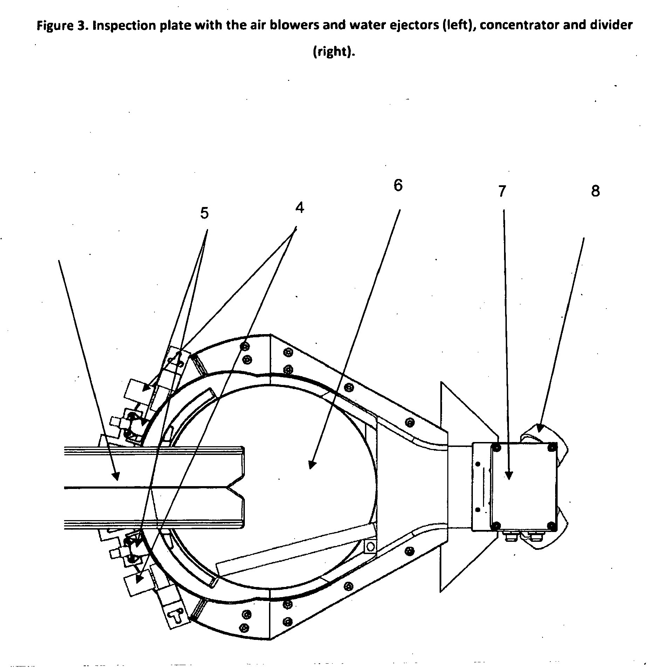

Figure 3 shows an embodiment of the subsystem for separating, handling and grouping fishes into batches according to the classification result. The inspection plate 6 has arranged around it a series of pressurised water ejectors 4 and pressurised water blowers 5, which push the individual from left to right according to the drawing, towards a channel divider 8 where a hatch activated by means of an electrovalve 7 guiding the fish to one classification channel or another depending on whether it has been classified as correct or incorrect. The positioning of the hatch determines the passage of the fish towards one of the openings of the channel divider 8 where the fish will be directed according to the classification result. The fish will be diverted towards one of the two possible channels in the divider 8 corresponding to the possible correct fish and incorrect fish classifications, according to whether or not it complies with the requirements of the established accepted region.

The possibility that the fish has not been correctly processed could be considered, whereby the channel divider 8 would have a third channel enabling the fish to return to the reception tank 1 to be inspected again if said fish has been erroneously classified. The need for reprocessing can be due to an erroneous capturing of fish image, because the fish has been moved and the image is out of focus or because an illumination element has failed and the image is invalid. In this case, the fish would be ejected through the third classification channel ("reprocessing") and directed by means of a conventional channel track, for example, a tubular duct with pressure induced by an alevin transfer pump to the reception tank 1.

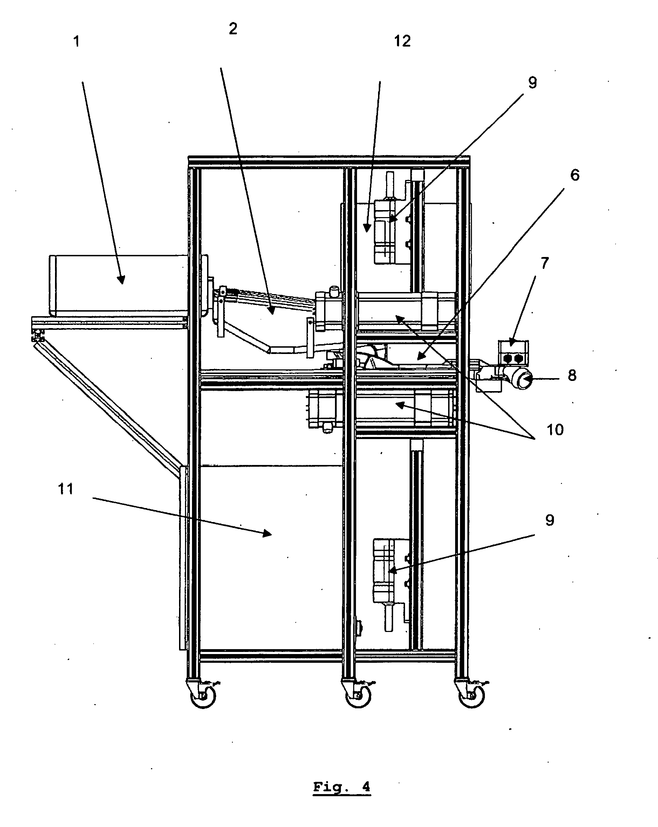

The complete system can be seen in figure 4. The system consists of mechanical parts, a series of active elements and of an electronic control part. The reception tank 1, the conveyor belt, the positioning ramp 2, the tubular water flow channel track 3, the water ejectors 4, the blowers 5, the inspection plate 6 and the channel divider 8 for the classification appear as mechanical parts. The cameras 9, the illumination points 10, the control monitor 12 and the electrovalve 7 are the active elements. And a cabinet 11 containing the electronic and the necessary control system comprising the processing means, the feeding means, relays and wiring are the electronic part.

The system, object of the invention is suitable for use in aquaculture plants where alevins and fish in general are produced. The system performs the inspection of the alevins, one by one, for the purpose of estimating if the individual presents defects or malformations making it unviable from their subsequent marketing point of view.

The system is preferably controlled by means of a control module comprised by the processing means such that the worker handles the system by means of a series of interfaces shown by preferably touch screen located at one side of the system controlling the operations of said system. The worker can select information for each inspected batch, such as the batch identifier, the type of species, the defects and malformations to be detected and the type of inspection to be performed (by the entire batch, by the number of individuals analysed). The control module can be configured so that at the end of an inspection session, the system issues a result report, where, the inspection results are shown in graphical and statistical manner. On the other hand, the control module can have an internal database in which the inspection results of each batch are stored for a subsequent consultation and filtering according to several search criteria, by dates, by species, by defects, etc.

Along with the inspection in search for malformations, the system can estimate the length, the size and the biomass of each individual, offering additional statistics in relation to the total weight by batch, mean weights and standard deviations. The results of the weight estimation can also be included in the internal database of the system and be exportable at the disposal of the worker.

The system can carry out another type of function, it can be configured to clean a determined number of fishes for the purpose of controlling the population of each lot and their general state.

Once the invention has been clearly described, it is herewith stated that the particular embodiments described above are susceptible to detail modifications provided that the fundamental principle of the invention are not altered, as detailed in the appended claims.

## Claims

1. A system for automatic classification of fish alevins by means of optical methods, comprising:
• a reception tank (1) storing the fishes to be classified;
• feeding means transporting the fishes from the reception tank (1) to an area designated for inspection ;
• a plurality of illumination points (10) arranged around the inspection area for illuminating the fish;
• a plurality of cameras (9) located around the inspection area capturing images of the fish;
• processing means detecting biometric, physiological and morphological characteristics of the fish from the images captured by the cameras (9), classifying the fish based on pre-established quality requirements;
• separating means diverting the classified fish towards one of the possible destination channels;
**characterised in that** the feeding means comprises:
- a conveyor belt for transferring the fish to be classified from the reception tank (1) to a positioning ramp (2) ending at an inspection plate (6);
- the positioning ramp (2), through which due to the force of gravity and the water current generated by a tubular water flow channel track (3), the fish is transported and deposited on the inspection plate (6);
and **in that** the inspection plate (6), located in the inspection area, is made of a transparent material, and the illumination points (10) and the cameras (9) are positioned at both sides of the inspection plate (6).

2. The system according to claim 1, wherein the positioning ramp (2) has in the end part a series of drainage holes made for preventing adding unnecessary water onto the inspection plate 6.

3. The system according to any of previous claims, configured to separate and position the fish to be classified on the conveyor belt by means of a series of water currents induced inside the reception tank (1) and the arrangement of separation brushes.

4. The system for automatic classification of fish alevins by means of optical methods according to any of the preceding claims, **characterised in that** the processing means comprise the detection of malformations, deformities and operculum, spinal, mouth, nose, eye, fin, pigmentation and body silhouette defects, as well as the detection of defects caused by diseases and injuries of the fishes inspected by means of applying models based on silhouette correlation, estimation of volumes in colour representation multi-dimensional spaces, including spatial modelling from fluorescence signals and segmentation and filtering of contrasting colour images.

5. The system for automatic classification of fish alevins by means of optical methods according to any of the preceding claims, **characterised in that** the separating means comprise a channel divider (8) directing the fish towards a destination channel by means of the movement of a hatch activated by an electrovalve (7) enabling the access of the fish towards the selected channel from the classification result.

6. The system for automatic classification of fish alevins by means of optical methods according to claim 5, **characterised in that** the channel divider (8) comprises a third channel enabling the access of the fish to the reception tank (1) if the classification has been erroneous.

7. The system for automatic classification of fish alevins by means of optical methods according to any of the preceding claims, **characterised in that** the processing means are configured for estimating the length, the size and the biomass of each fish inspected by the system.

8. The system for automatic classification of fish alevins by means of optical methods according to any of the preceding claims, **characterised in that** the processing means comprise a control module configured for:
• managing the feeding means by enabling the individual removal of fishes from the reception tank (1) according to a determined rate;
• managing the processing means, comprising user interfaces which show the captured images and the classification results obtained and a database which stores the results obtained;
• controlling the separating means by enabling the access of the selected fish towards one of the destination channels protruding from the channel divider (8) according to the classification performed.

9. A method for automatic classification of fish alevins by means of optical methods, comprising:
• feeding means transporting the fish stored in a reception tank (1) to an area designated for inspection ;
• a plurality of illumination points (3) illuminating the fish in the inspection area;
• a plurality of cameras (9) capturing images of the fish in the inspection area;
• processing means processing the images captured by the cameras (9), comprising the detection of physiological and morphological characteristics of the fishes and the classification of the fish based on pre-established quality requirements;
• separating means diverting the classified fish towards one of the possible destination channels;
**characterised in that** the method further comprises:
- transferring the fish to be classified, by means of a conveyor belt, from the reception tank (1) to a positioning ramp (2) ending at an inspection plate (6);
- transporting and depositing the fish on the inspection plate (6) by means of a positioning ramp (2) and due to the force of gravity and the water current generated by a tubular water flow channel track (3);
and **in that** the inspection plate (6), located in the inspection area, is made of a transparent material, and the illumination points (10) and the cameras (9) are positioned at both sides of the inspection plate (6).

10. The method for automatic classification of fish alevins by means of optical methods according to claim 9, **characterised in that** the processing means are configured for detecting the malformations, deformities and operculum, spinal, mouth, nose, eye, fin, pigmentation and body silhouette defects, as well as the detection of defects caused by diseases and injuries of the fishes inspected by means of applying models based on silhouette correlation, estimation of volumes in colour representation multi-dimensional spaces, including spacial modelling from fluorescence signals, and segmentation and filtering of images.

11. The method for automatic classification of fish alevins by means of optical methods according to any of claims 9 to 10, **characterised in that** the separating means comprise a channel divider (8) directing the fish towards a destination channel by means of the movement of a hatch activated by an electrovalve (7) enabling the access of the fish towards the selected channel from the classification result.

12. The method for automatic classification of fish alevins by means of optical methods according to claim 11, **characterised in that** the channel divider (8) comprises a third channel enabling the access of the fish to the reception tank (1) if the classification has been erroneous.

13. The method for automatic classification of fish alevins by means of optical methods according to any of claims 9 to 12, **characterised in that** the processing means are configured for estimating the length, the size and the biomass of each fish inspected by the system.

14. The method for automatic classification of fish alevins by means of optical methods according to any of claims 9 to 13, **characterised in that** the processing means comprise a control module configured for:
• managing the feeding means by enabling the individual removal of fish from the reception tank (1) according to a determined rate;
• managing the processing means, comprising user interfaces which show the captured images and the classification results obtained and a database which stores the results obtained;
• controlling the separating means by enabling the access of the selected fish towards one of the destination channels protruding from the channel divider (8) according to the classification performed.

## Patentansprüche

1. System zur automatischen Klassifizierung von Fischbrut durch optische Verfahren, umfassend:
• ein Aufnahmebecken (1), in welchem die zu klassifizierenden Fische untergebracht sind;
• Zuführmittel, welche die Fische vom Aufnahmebecken (1) zu einem zur Untersuchung bestimmten Bereich transportieren;
• eine Vielzahl an Beleuchtungspunkten (10), welche um den Untersuchungsbereich herum zur Beleuchtung der Fische angeordnet sind;
• eine Vielzahl an Kameras (9), welche um den Untersuchungsbereich herum angeordnet sind, welche Bilder der Fische aufnehmen;
• Bearbeitungsmittel, welche biometrische, physiologische und morphologische Merkmale der Fische von den durch die Kameras (9) aufgenommenen Bildern erkennen, wobei sie die Fische auf Grundlage von zuvor festgelegten Qualitätsanforderungen klassifizieren;
• Trennmittel, welche die klassifizierten Fische zu einem der möglichen Zielkanäle abzweigen;
**dadurch gekennzeichnet, dass** die Zuführmittel Folgendes umfassen:
- ein Förderband zum Weiterleiten der zu klassifizierenden Fische vom Aufnahmebecken (1) zu einer Positionierungsrampe (2), welche an einer Untersuchungsplatte (6) endet;
- die Positionierungsrampe (2), durch welche die Fische aufgrund der Schwerkraft und dem durch eine rohrförmige Wasserflusskanalstrecke (3) erzeugten Wasserstrom auf die Untersuchungsplatte (6) transportiert und auf dieser abgeladen werden;
und dass die Untersuchungsplatte (6), welche im Untersuchungsbereich gelegen ist, aus einem transparenten Material besteht, und die Beleuchtungspunkte (10) und die Kameras (9) auf beiden Seiten der Untersuchungsplatte (6) angeordnet sind.

2. System nach Anspruch 1, wobei die Positionierungsrampe (2) am Endteil eine Reihe an Drainagelöchern hat, die eingearbeitet wurden, um zu verhindern, dass unnötiges Wasser auf die Untersuchungsplatte (6) hinzugegeben wird.

3. System nach einem der vorherigen Ansprüche, welches ausgebildet ist, um durch eine Reihe an Wasserströmen, die innerhalb des Aufnahmebeckens (1) erzeugt werden, und durch die Anordnung von Trennungsbürsten die zu klassifizierenden Fische zu trennen und auf das Förderband zu positionieren.

4. System zur automatischen Klassifizierung von Fischbrut durch optische Verfahren nach einem der vorherigen Ansprüche, **dadurch gekennzeichnet, dass** die Bearbeitungsmittel das Erkennen von Missbildungen, Verformungen und Störungen des Kiemendeckels, des Rückgrats, des Munds, der Nase, der Augen, der Flossen, der Pigmentierung und der Körpersilhouette umfassen, sowie das Erkennen von durch Krankheiten und Verletzungen der Fische hervorgerufenen Störungen, die durch das Anwenden von Modellen untersucht werden, die auf der Silhouettenkorrelation, der Volumenschätzung in Farben darstellenden, mehrdimensionalen Räumen, einschließlich der räumlichen Modellierung von Fluoreszenzsignalen und der Segmentierung und dem Filtern von kontrastierenden Farbbildern basieren.

5. System zur automatischen Klassifizierung von Fischbrut durch optische Verfahren nach einem der vorherigen Ansprüche, **dadurch gekennzeichnet, dass** die Trennmittel einen Kanaltrenner (8) umfassen, welcher die Fische durch die Bewegung einer Klappe, welche durch ein Elektroventil (7) aktiviert wird, zu einem Zielkanal hin lenkt, wobei den Fischen anhand des Klassifizierungsergebnisses Zugang zum ausgewählten Kanal gewährt wird.

6. System zur automatischen Klassifizierung von Fischbrut durch optische Verfahren nach Anspruch 5, **dadurch gekennzeichnet, dass** der Kanaltrenner (8) einen dritten Kanal umfasst, welcher den Fischen Zugang zum Aufnahmebecken (1) gewährt, wenn die Klassifizierung fehlerhaft gewesen ist.

7. System zur automatischen Klassifizierung von Fischbrut durch optische Verfahren nach einem der vorherigen Ansprüche, **dadurch gekennzeichnet, dass** die Bearbeitungsmittel ausgebildet sind, um die Länge, die Größe und die Biomasse jedes durch das System untersuchten Fisches zu schätzen.

8. System zur automatischen Klassifizierung von Fischbrut durch optische Verfahren nach einem der vorherigen Ansprüche, **dadurch gekennzeichnet, dass** die Bearbeitungsmittel ein Steuermodul umfassen, welches ausgebildet ist, um:
• die Zuführmittel durch Freigabe der einzelnen Entnahmen von Fischen aus dem Aufnahmebecken (1) gemäß einer bestimmten Rate zu bedienen;
• die Bearbeitungsmittel zu bedienen, umfassend die Benutzerschnittstellen, welche die aufgenommenen Bilder und die gewonnenen Klassifizierungsergebnisse zeigen, und eine Datenbank, welche die gewonnen Ergebnisse speichert;
• die Trennmittel zu steuern, indem den ausgewählten Fischen gemäß der durchgeführten Klassifizierung Zugang zu einem der Zielkanäle, der von dem Kanaltrenner (8) vorsteht, gewährt wird.

9. Verfahren zur automatischen Klassifizierung von Fischbrut durch optische Verfahren, umfassend:
• Zuführmittel, welche die in einem Aufnahmebecken (1) untergebrachten Fische zu einem für die Untersuchung bestimmten Bereich transportieren;
• eine Vielzahl an Beleuchtungspunkten (3), welche die Fische in dem Untersuchungsbereich beleuchten;
• eine Vielzahl an Kameras (9), welche Bilder von den Fischen in dem Untersuchungsbereich aufnehmen;
• Bearbeitungsmittel, welche die durch die Kameras (9) aufgenommenen Bilder bearbeiten, umfassend das Erkennen von physiologischen und morphologischen Merkmalen der Fische und die Klassifizierung der Fische auf Grundlage von zuvor festgelegten Qualitätsanforderungen;
• Trennmittel, welche die klassifizierten Fische zu einem der möglichen Zielkanäle abzweigen;
**dadurch gekennzeichnet, dass** das Verfahren weiterhin Folgendes umfasst:
- das Weiterleiten der zu klassifizierenden Fische durch ein Förderband vom Aufnahmebecken (1) zu einer Positionierungsrampe (2), welche an der Untersuchungsplatte (6) endet;
- das Transportieren und Absetzen der Fische auf die Untersuchungsplatte (6) durch eine Positionierungsrampe (2) und aufgrund der Schwerkraft und dem durch eine rohrförmige Wasserflusskanalstrecke (3) erzeugten Wasserstrom;
und dass die Untersuchungsplatte (6), welche im Untersuchungsbereich gelegen ist, aus einem transparenten Material besteht, und die Beleuchtungspunkte (10) und die Kameras (9) auf beiden Seiten der Untersuchungsplatte (6) gelegen sind.

10. Verfahren zur automatischen Klassifizierung von Fischbrut durch optische Verfahren nach Anspruch 9, **dadurch gekennzeichnet, dass** die Bearbeitungsmittel zum Erkennen von Missbildungen, Verformungen und Störungen des Kiemendeckels, des Rückgrats, des Munds, der Nase, der Augen, der Flossen, der Pigmentierung und der Körpersilhouette ausgebildet sind, sowie das Erkennen von durch Krankheiten und Verletzungen der Fische hervorgerufenen Störungen, die durch das Anwenden von Modellen untersucht werden, welche auf Silhouettenkorrelation, der Volumenschätzung in Farben darstellenden, mehrdimensionalen Räumen, einschließlich dem räumlichen Modellieren von Fluoreszenzsignalen, und der Segmentierung und dem Filtern von Bildern basieren.

11. Verfahren zur automatischen Klassifizierung von Fischbrut durch optische Verfahren nach einem der Ansprüche 9 bis 10, **dadurch gekennzeichnet, dass** die Trennmittel einen Kanaltrenner (8) umfassen, welcher die Fische durch die Bewegung einer Klappe, welche durch ein Elektroventil (7) aktiviert wird, zu einem Zielkanal lenkt, wobei den Fischen anhand des Klassifizierungsergebnisses Zugang zum ausgewählten Kanal gewährt wird.

12. Verfahren zur automatischen Klassifizierung von Fischbrut durch optische Verfahren nach Anspruch 11, **dadurch gekennzeichnet, dass** der Kanaltrenner (8) einen dritten Kanal umfasst, welcher den Fischen Zugang zum Aufnahmebecken (1) gewährt, wenn die Klassifizierung fehlerhaft gewesen ist.

13. Verfahren zur automatischen Klassifizierung von Fischbrut durch optische Verfahren nach einem der Ansprüche 9 bis 12, **dadurch gekennzeichnet, dass** die Bearbeitungsmittel ausgebildet sind, um die Länge, die Größe und die Biomasse jedes durch das System untersuchten Fisches zu schätzen.

14. Verfahren zur automatischen Klassifizierung von Fischbrut durch optische Verfahren nach einem der Ansprüche 9 bis 13, **dadurch gekennzeichnet, dass** die Bearbeitungsmittel ein Steuermodul umfassen, welches ausgebildet ist, um:
• die Zuführmittel durch Freigabe der einzelnen Entnahmen von Fischen aus dem Aufnahmebecken (1) gemäß einer bestimmten Rate zu bedienen;
• die Bearbeitungsmittel zu bedienen, umfassend Benutzerschnittstellen, welche die aufgenommenen Bilder und die gewonnenen Klassifizierungsergebnisse zeigen, und eine Datenbank, welche die gewonnenen Ergebnisse speichert;
• die Trennmittel zu steuern, indem den ausgewählten Fischen gemäß der durchgeführten Klassifizierung Zugang zu einem der Zielkanäle, welcher von dem Kanaltrenner (8) hervorsteht, zu gewähren.

## Revendications

1. Système de classification automatique d'alevins de poisson au moyen de procédés optiques, qui comprend :
• un réservoir de réception (1) pour l'entreposage des poissons à classifier ;
• des moyens d'alimentation qui transportent les poissons du réservoir de réception (1) à une aire désignée pour leur inspection ;
• une pluralité de points d'éclairage (10) disposés au tour du plateau d'inspection (4) pour éclairer les poissons (6) ;
• une pluralité de caméras (9) situées autour de l'aire d'inspection (6) qui captent des images des poissons ;
• des moyens de traitement pour détecter les caractéristiques biométriques, physiologiques et morphologiques des poissons sur la base de contraintes de qualité préétablies ;
• des moyens de séparation déviant les poissons classifiés vers l'un des possibles canaux de destination ;
**caractérisé en ce que** les moyens d'alimentation comprennent :
- une bande transporteuse pour le transfert des poissons à classifier du réservoir de réception (1) a une rampe de positionnement (2) qui aboutit sur un plateau d'inspection (6) ;
- la rampe de positionnement (2), à travers de laquelle grâce à la force de gravité et au courant d'eau généré par une piste de canal tubulaire d'écoulement d'eau (3), les poissons sont transportés et déposés sur le plateau d'inspection (6) ;
et **en ce que** le plateau d'inspection (6), situé dans l'aire d'inspection, est constitué d'un matériau transparent, et les points d'éclairage (10) et les caméras (9) sont positionnés à un côté et à l'autre du plateau d'inspection (6).

2. Système selon la revendication 1, dans lequel la rampe de positionnement (2) a dans son extrémité une série de trous de drainage pratiqués pour prévenir l'ajout d'eau nécessaire sur le plateau d'inspection (6).

3. Système selon l'une quelconque des revendications précédentes, configuré pour séparer et positionner les poissons à classifier sur la bande transporteuse au moyen d'une série de courants d'eau induits au sein du réservoir de réception (1) et la disposition de broches de séparation.

4. Système pour la classification automatique d'alevins de poisson au moyen de procédés optiques selon l'une quelconque des revendications précédentes, **caractérisé en ce que** les moyens de traitement comprennent la détection de malformations, difformités et défauts au niveau d'opercule, épine dorsale, bouche, nez, yeux, nageoire, pigmentation et silhouette corporelle, ainsi que la détection de défauts provoqués par des maladies et des blessures des poissons inspectés en appliquant des modèles basés sur la corrélation de silhouettes, l'estimation de volumes dans des représentations en couleur d'espaces multidimensionnels, en incluant le modelage spatial à partir de signaux fluorescents et de la segmentation et le filtrage d'images contrastantes.

5. Système de classification automatique d'alevins de poisson au moyen de procédés optiques selon l'une quelconque des revendications précédentes, **caractérisé en ce que** les moyens de séparation comprennent un diviseur de canaux (8) dirigeant les poissons vers un canal de destination au moyen du mouvement d'une vanne activée par une électrovanne (7) qui autorise l'accès des poissons vers le canal sélectionné à partir du résultat de classification.

6. Système de classification automatique d'alevins de poisson au moyen de procédés optiques selon la revendication 5, **caractérisé en ce que** le diviseur de canal (8) comprend un troisième canal qui autorise l'accès des poissons au réservoir de réception (1) en cas de classification erronée.

7. Système de classification automatique d'alevins de poisson au moyen de procédés optiques selon l'une quelconque des revendications précédentes, **caractérisé en ce que** les moyens de traitement sont configurés pour estimer la longueur, la taille et la biomasse de chaque poisson inspecté avec ce système.

8. Système de classification automatique d'alevins de poisson au moyen de procédés optiques selon l'une quelconque des revendications précédentes, **caractérisé en ce que** les moyens de traitement comprennent un module de contrôle configuré pour :
• gérer les moyens d'alimentation en permettant le retrait manuel de poissons du réservoir de réception (1) selon une vitesse déterminée ;
• gérer les moyens de traitement, qui comprennent des interfaces d'usager qui montrent les images captées et les résultats obtenus de la classification ainsi qu'une base de données qui garde les résultats obtenus ;
• contrôler les moyens de séparation en permettant l'accès des poissons sélectionnés vers l'un des canaux de destination qui font saillie du diviseur de canaux (8) selon la classification effectuée.

9. Procédé de classification automatique d'alevins de poisson au moyen de procédés optiques qui comprend :
• des moyens d'alimentation transportant les poissons stockés dans un réservoir de réception (1) à une aire désignée pour leur inspection ;
• une pluralité de points d'éclairage (3) éclairant les poissons dans l'aire d'inspection ;
• une pluralité de caméras (9) qui captent des images des poissons dans l'aire d'inspection ;
• des moyens de traitement traitant les images captées par les caméras (9), y compris la détection de caractéristiques physiologiques et morphologiques des poissons et la classification des poissons basée sur des contraintes de qualité préétablies ;
• des moyens de séparation déviant les poissons classifiés vers l'un des possibles canaux de destination.
**caractérisé en ce que** le procédé comprend en outre :
- le transfert des poissons à classifier, au moyen d'une bande transporteuse, du réservoir de réception (1) à une rampe de positionnement (2) qui aboutit sur un plateau d'inspection (6) ;
- le transport et dépôt des poissons sur le plateau d'inspection (6) au moyen d'une rampe de positionnement (2) et grâce aussi à la force de gravité et au courant d'eau généré par une piste de canal tubulaire d'écoulement d'eau (3);
et **en ce que** le plateau d'inspection (6), situé dans l'aire d'inspection, est constitué d'un matériau transparent, et les points d'éclairage (10) et les caméras (9) sont positionnés à un côté et à l'autre du plateau d'inspection (6).

10. Procédé de classification automatique d'alevins de poisson au moyen de procédés optiques selon la revendication 9, **caractérisé en ce que** les moyens de traitement sont configurés pour la détection de malformations, difformités et défauts au niveau d'opercule, épine dorsale, bouche, nez, yeux, nageoire, pigmentation et silhouette corporelle, ainsi que la détection de défauts provoqués par des maladies et des blessures des poissons inspectés en appliquant des modèles basés sur la corrélation de silhouettes, l'estimation de volumes dans des représentations en couleur d'espaces multidimensionnels, en incluant le modelage spatial à partir de signaux fluorescents et de la segmentation et le filtrage d'images.

11. Procédé de classification automatique d'alevins de poisson au moyen de procédés optiques selon l'une quelconque des revendications 9 à 10, **caractérisé en ce que** les moyens de séparation comprennent un diviseur de canaux (8) dirigeant les poissons vers un canal de destination au moyen du mouvement d'une vanne activée par une électrovanne (7) qui autorise l'accès des poissons vers le canal sélectionné à partir du résultat de classification.

12. Procédé de classification automatique d'alevins de poisson au moyen de procédés optiques selon la revendication 11, **caractérisé en ce que** le diviseur de canal (8) comprend un troisième canal qui autorise l'accès des poissons au réservoir de réception (1) en cas de classification erronée.

13. Procédé de classification automatique d'alevins de poisson au moyen de procédés optiques selon l'une quelconque des revendications 9 à 12, **caractérisé en ce que** les moyens de traitement sont configurés pour estimer la longueur, la taille et la biomasse de chaque poisson inspecté avec ce système.

14. Procédé de classification automatique d'alevins de poisson au moyen de procédés optiques selon l'une quelconque des revendications 9 à 13, **caractérisé en ce que** les moyens de traitement comprennent un module de contrôle configuré pour :
• gérer les moyens d'alimentation en permettant le retrait manuel de poissons du réservoir de réception (1) selon une vitesse déterminée ;
• gérer les moyens de traitement, qui comprennent des interfaces d'usager qui montrent les images captées et les résultats obtenus de la classification ainsi qu'une base de données qui garde les résultats obtenus ;
• contrôler les moyens de séparation en permettant l'accès des poissons sélectionnés vers l'un des canaux de destination qui font saillie du diviseur de canaux (8) selon la classification effectuée.
